# EUROPEAN PATENT APPLICATION

(11) **EP 3 067 803 A1**
(43) Date of publication of application: **14.09.2016**
(21) Application number: 15158454.7
(22) Date of filing: 10.03.2015
(51) Int. Cl.: G06F 17/30

(54) **Method and apparatus for flexibly storing data in a relational database**

(71) Applicant: Ricoh Company, Ltd., Tokyo 143-8555 (JP)
(72) Inventor: Skvirski, Alexei, 40472 Düsseldorf (DE)
(74) Representative: Schwabe - Sandmair - Marx

(57) **Abstract**

The present invention relates to a method and device for storing data in a relational database management system, wherein data to be stored are checked as to whether they are assigned a unique identifier which is listed as a unique identifier which exists in the relational database and can be processed in the relational database, and wherein a new unique identifier which can be processed by the database is automatically generated if the unique identifier checked is not to be found within the list of unique identifiers which can be processed by the relational database, wherein the data are then stored by way of a mapping process using the new unique identifier.

## Description

The present invention relates to a method for storing data in a database having a particular relational database structure, in accordance with the preamble of Claim 1. The present invention also relates to a device for storing data in a relational database and to a program designed to use said method and control said device.

Devices of all types are increasingly being controlled and monitored using processors or computers. These processors and computers allow data produced throughout the operation of the devices to be collected. Such data can be collected and processed, in order for example to generate reports which can be interpreted by human operators. It is also possible to alter or supplement any kind of control programs of the devices which are computer-controlled and/or processor-controlled. Accordingly, the computer-controlled or processor-controlled devices can be provided with new control software and thus can also produce data not known beforehand. In other words, automobiles, aeroplanes, ships or the like can for example be provided with a diagnostic system which can communicate with a centralised server, wherein the diagnostic data can be stored in a database in terms to generate reports, produce statistics and plan future developments.

It is known that relational databases have been identified as having certain advantages, such that they are increasingly used as mass storage media. However, as more and more different types of automobiles are introduced onto the market, these automobiles produce an increasing number and variety of diagnostic data. Because the storage structure of a relational database is a static structure which is not flexible, any new data which arise due to an increasing variety of data cannot be stored in a relational database without first adapting the structure of the relational database to the new data.

Other fields which are subject to similar considerations include for example local systems or distributed systems consisting of printers, copiers, facsimile devices or even devices which are used as household appliances, such as for example refrigerators, washing machines, TV sets and mobile phones, or energy-supplying devices such as solar panels, fuel cells, central heating devices and the like.

Such devices should be accessible by any kind of control device such as a computer or server, via wire-connected or wireless networks. In such complex systems, there are various circumstances which may give rise to new types of data. Existing devices can for example be provided with new control software in order to support additional functions and/or new and advanced devices can be added to the system which supports new functions, and so on. Accordingly, if such devices generate data of a different type which is not known to a system which stores all the data in a relational database, and since the structure of the relational database is not able to store such unknown data which do not relate to unique identifiers suitable for being processed by the relational database, the relational database would have to be adapted to the new data every time such new data are generated in order to be stored.

This is not usually possible in practice, hence information is lost or the proper functioning of the relational database may be seriously disrupted.

The present invention is correspondingly directed to the expanding need for a flexible and economical form of data storage which can be adapted to the demands of a database system which is not flexible *per se.*

In accordance with the present invention, a method for storing data in a database having a particular relational database structure includes the step of inputting data, wherein each type of data is assigned a unique identifier, wherein each unique identifier is assigned to a predetermined storage location within the database and a particular machine-readable electronic format, and wherein the type of data is stored in the database structure corresponding to its assigned unique identifier at the storage location corresponding to the assigned unique identifier.

In accordance with the invention, the data to be inputted into the database have to be checked as to whether they are assigned a unique identifier which is listed as a unique identifier which exists in the database and can be processed in the database. If the data are not already assigned a listed unique identifier, then a unique identifier is automatically generated. This automatically generated unique identifier is assigned to the data and then mapped to a storage location within the database. Accordingly, it is possible to store any type of data, even those not formerly known to the database, in a retrievable manner in the relational database, without the need to adapt the database structure of the relational database to any emerging new types of data. In other words, the mapping process can be made more flexible, in order to enable an inflexible database exhibiting a relational database structure to store data more flexibly.

It is preferable if the automatically generated unique identifier to be assigned to a new type of data is generated on the basis of a list of unique identifiers which can be used in the relevant relational database. It is thus possible to solve the problem of static unique identifier mapping known in the prior art without having to adapt the structure of the database each time a new type of data is to be stored in the database. Accordingly, if data are to be stored which are assigned an unknown unique identifier which cannot be processed and cannot be mapped in order to be stored, then the data can be assigned a unique identifier which has just been created and which can be mapped in order to write the data into the relational database, such that the data can also be reproduced on the basis of the corresponding mapping process.

Preferably, the automatically generated unique identifier is to be added to the list of unique identifiers as a unique identifier which is being used in the relevant relational database. Accordingly, when another new type of data is to be stored, the list of unique identifiers already contains the automatically generated unique identifier generated in a preceding storage cycle, such that another unique identifier is automatically generated which is still available and free for use in connection with another new type of data.

In this way, the database structure can be continuously adapted to new types of data. The proposed method of data storage in accordance with the present invention is particularly advantageous if the data to be stored in the database are data from devices represented by software objects.

In addition, the unique identifiers which are to be automatically generated can also be generated by being read out of a storage device which for example contains a table of suitable and preferably as yet unused unique identifiers which are still available for new types of data and/or for future storing cycles.

The present invention is also directed to a device and/or system for storing data in a relational database, wherein the device and/or system can be connected to the relational database and comprises an input unit configured to receive data having a data structure prepared for storage in the relational database. A checking unit is also provided which is configured to check whether the received data relate to a unique identifier used in the relational database. An assigning unit is assembled which is configured to assign a unique identifier, which is to be assigned to the received data and is suitable for use in the relational database, to a storage location within the relational database and to the received data, if the received data are not already assigned a unique identifier used in the relational database. Accordingly, the above-referenced units are able to assign new types of data new unique identifiers which are suitable for use in the relational database but not yet in use.

Thus, even though a relational database is not flexible *per se,* the device in accordance with the present invention is capable of making the structure of a relational database more flexible by way of a more flexible mapping process. The new type of data can be assigned the new unique identifier on the basis of a data memory as referred to above, wherein the data memory is configured to store unique identifiers which are suitable for storing data in the relational database which also contains new unique identifiers available for storing new types of data. It may also be preferable to use a generating unit which is configured to automatically generate new unique identifiers suitable for storing data in the relational database.

It is also preferable to additionally introduce a marking unit which is configured to mark the automatically generated new unique identifier/s as (a) unique identifier/s which is/are used in the relational database. Using this feature, it is possible to update the list of unique identifiers used in the relational database, such that new types of data can be assigned other suitable and therefore still new unique identifiers which are not yet in use.

Accordingly, the present invention is directed to flexibly using a relational database in local or distributed systems of devices in which a large amount of device-specific data is to be stored, wherein different kinds of devices produced by different manufacturers provide different data or different data formats which have to be collected by a system server. However, device data representations have to be transmitted regularly to a relational database for long-term storage purposes. While the office devices, household devices or the like included in the system can vary with respect to their type, manufacturer, capabilities and so forth, the structure of the relational database is very rigid, such that the system has only very limited flexibility due to the fixed storage structure of its database, which in particular prevents the system from being supplemented with different devices such as office machines, household devices and the like which are manufactured and distributed by different companies.

Data collection methods are commonly used in modem information processing and prospecting practice. These methods attempt to produce a set of robust and high-performance data, with the aim of acquiring a certain type of device data from the server database and simultaneously producing various sorts of reports which can be read and interpreted by human operators. Relational database management systems (RDBMS) now play a major role as an information platform being used in an attempt to capture the real-world data as a collection of interrelated data arranged in rows and columns. The process of data retrieval and acquisition is thus being considered as an RDBMS-based response to a series of standardised program requests written in universal query language Structured query language (SQL), for example, is a programming language designed for managing data in relational database management systems (RDBMS).

In accordance with one example, a plurality of data coming from real-world printing devices process attributes representing measurable characteristics of a print medium for printing. Indeed, a person skilled in the art will assume that one and the same printing device can support a large variety of print media, depending on the technical specifications of the relevant printing device model and user instructions. A more important factor to be mentioned here is that the current level of technological progress provides hardware vendors with almost limitless options for extending the print media support of their printing devices, for example by way of internal printing firmware upgrades. As indicated above, however, relational database management systems (RDBMS) use very rigid data storage schemes which cannot be adapted to the changing needs of a network which is arbitrarily changed, in particular with respect to its system components. In particular, if a reporting system is based on the relational concept, the resulting reports are highly critical to the structure of the relational database, since RDBMS schemes are based on a data domain model which has to comply with very rigid and predefined storage schemes and domain definitions. On the other hand, relational database technology has advantages over file system-driven data storage approaches, namely that it allows compact data representation with the given domain of predefined, already known values as well as rapid data extraction using unified query language. In the prior art method, the multitude of technical parameters already known are mapped onto the corresponding set of unique identifiers, stored in an RDBMS table in a many-to-one relationship to the input data.

However, this approach has the drawback that vendor-specific data which change rapidly and irregularly over time, due for example to the ongoing development of additional technical features such as for example additional print media supported by a printing device, mean that the aforementioned mapping process cannot be reliably executed, since the input values to be mapped are still unknown at the time of mapping. This situation prompts hardware vendors to constantly update the respective mapping tables of their RDBMS-based reporting applications already in use in the field, which aside from generating great expense in and of itself, also increases the risk of rendering unusable reports already in use, for example due to potential data loss, if the process of upgrading the mapping table fails.

Accordingly, it is an advantage of the present invention that it provides a relational database data processing method which is capable both of flexibly mapping a domain of objects of the same type, which undergo a variety of changes irregularly over time, and of storing and retrieving these objects from RDBMS data rapidly.

Another benefit of the present invention is that it provides a domain object mapping table with a structure of unique identifiers which allow domain objects which undergo a variety of changes irregularly over time to be effectively identified.

Another advantageous feature of the present invention is the increased flexibility in the interaction between systems which are based on a domain model including a number of objects representing devices and are controlled by a server maintaining software objects representing these devices.

In order to achieve these advantages in a system comprising a plurality of image-forming devices such as printers, a method for flexibly storing data from the plurality of printing devices on the basis of a relational database storage engine is proposed. Within this context, the present invention provides an RDBMS model mapping method for mapping domain values to unique identifiers without having to constantly perform scheme updates on the static mapping tables of applications already in use in the field. It also effectively implements a mechanism of mapping unique identifiers to domain objects in order to effectively identify domain objects which undergo a variety of changes irregularly over time.

In summary, a method for flexibly storing software objects permanently in a computer memory is disclosed. In accordance with one example, a plurality of data from printing devices are to be stored at regular time intervals for subsequent data processing by a central server. However, the specifics of the data communication between the plurality of printing devices which supply the data and the end-users which act as the data consumers present a problem in the form of the multitude of technical parameters to be mapped to a corresponding set of unique identifiers stored in RDBMS tables in a many-to-one relationship to the input data. This is also known as the static unique identifier mapping problem.

To address this problem, it is first necessary to consider the basic principles of printing device relational data storage workflows. Usually, each printing device supports a set of different print media formats, also referred to in the printing industry as "paper sizes". Paper size is calculated from the width and length of the paper media, measured either in metric units such as centimetres or in imperial units such as inches, and from its orientation. This provides the basis for a printing device printing area. Since the ability of a printing device to support a large array of print media contributes to its market value, printing device vendors endeavour to constantly broaden the range of supported paper media (usually in the form of printing device firmware updates). Supported paper sizes therefore represent intrinsic characteristics of a printing device and are subject to manufacturers' specifications. Remarkably, most of these data of interest can be definitively interpreted, thus enabling one-to-one mapping within a relational database table by way of unique identifiers. As the name suggests, each identifier uniquely designates a particular paper size entity of its kind and in turn references particular print media of interest. Since the printing device can apparently only process one print medium (paper size) or no print medium at any given moment, the relational database's records of print jobs executed by the printing devices will contain, among other data, values for paper size unique identifiers which reflect the value of a specific print media set of attributes (parameters) at a specific moment in time. Thus, for any given moment in time, each printing device print medium can be logically represented by absolute values of paper size unique identifiers from the set of all possibly valid values which are already known for a given printing device. On the basis of this, it becomes clear that the process of registering printing device print media (paper size) data within an RDBMS-based data storage system relies heavily on the current status of the information on unique identifiers for the paper size of all potentially allowable print media registered in the data storage system. As already demonstrated above, the actual information on unique identifiers for print media supported by a particular printing device of interest may be subject to change, since printing device hardware manufacturers are constantly working to enhance the range of print media supported. Thus, the required unique identifier data for paper size information may well be rendered dynamically (in the sense of being coupled to the support and service life of a particular printing device of interest). Relational database scheme objects, which are a core part of RDBMS data storage applications, are by contrast static in nature. In other words, information on unique identifiers for paper size, once created, remain unaltered unless directly updated during the product's service life by support-scheduled software updates. This phenomenon is also referred to as the static unique identifier mapping problem and states that paper size unique identifiers are statically mapped to their counterparts as represent in the RDBMS table. It will be evident to the person skilled in the art that this phenomenon embodies a significant problem for RDBMS-based printing device data storage and reporting applications, since the latter may exhibit occasional discontinuity-of-service problems whenever there is a mismatch between unique identifiers for printing device paper size data based on the database scheme and those coming from the actual printing devices.

A preferred embodiment of the method in accordance with the invention can include two stages of data processing. In a first stage, the recorded printing device data, which contain paper size unique identifiers for particular paper sizes of interest, are automatically referenced for their values when a static paper size identifier is encountered which is already registered in the RDBMS-based storage system; this referencing is performed on the basis of the data processing time interval of interest. If the paper size unique identifier detected is already known to the storage system, further processing is omitted. If, however, a paper size unique identifier is detected which is found to be new to the system, i.e. unknown among the registered, mapped static unique identifiers values, then it is automatically added to the stock of mapped static unique identifiers. In order to be able to differentiate the mapped static unique identifiers which are automatically detected and added to the storage system from those which were already statically mapped and created initially, a special storage structure of mapped static unique identifiers, together with a storage naming convention, may be proposed. In the second stage of said preferable embodiment of the method in accordance with the invention, the paper size unique identifier found stores device counter data of the portions of the transmitted data already checked on the data storage side.

The invention shall now be described on the basis of the accompanying drawings.
Figure 1 depicts a flow diagram of an embodiment of the present invention.
Figure 2 shows another flow diagram of another embodiment of the present invention.
Figure 3 shows a static paper size identifier checking process of a specific embodiment.
Figure 4 shows a static paper size identifier of a specific embodiment, used in addition to the storage as used in the proposed solution.
Figure 5 shows a mapped static unique identifier storage entity of a specific embodiment, as used in the proposed solution.
Figure 6 shows a mapped static unique identifier naming convention, as used in the proposed solution.
Figure 7 is a hardware configuration diagram of a system for realising the flow diagram according to Figure 2 and Figure 1 in part.

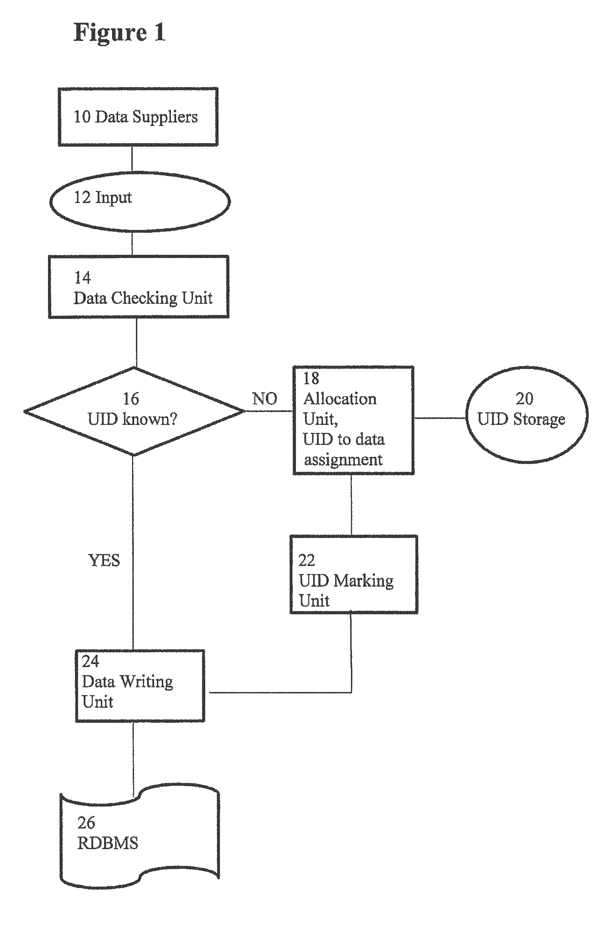

A first embodiment of the present invention corresponding to Figure 1 will now be described.

The data suppliers are provided, as indicated by the reference sign 10, and can be implemented by any kind of device or apparatus which includes a processor or which is connected to a processor, computer, server or the like. The data suppliers 10 usually consist of at least one device, for example a printer, a multifunctional copier, a household heating device, an automobile, an aeroplane or any other kind of device which is controlled by a processor and by measuring some kind of physical measurement data, management data or the like.

Accordingly, the data suppliers 10 supply data which may be useful for obtaining information as to the status of the data suppliers or the status of a large variety of different data suppliers, wherein the data supplied are stored for future processing.

The mass storage entity deemed most suitable for such tasks is a relational database management system (RDBMS) 24, also referred to simply as a relational database. Such relational databases 24 are well known as mass storage devices, but are highly inflexible in cases where the data to be stored vary. Conversely, an RDBMS 24 is a very quick, reliable and cheap mass storage device.

In accordance with the invention, the data suppliers 10 are connected to the RDBMS 24 via a data checking unit 14, wherein the data suppliers 10 transmit their data to the data checking unit 14 via an input unit 12. The data checking unit 14 is configured to check whether the data received via the input unit 12 are assigned a unique identifier which is known to and in use within the RDBMS 24. If the data received and checked by the data checking unit 14 do not relate to any unique identifier in use within the RDBMS 24, the data are sent to an assigning unit 16 for automatically generating a unique identifier which is known to the RDBMS 24 but not yet in use within the RDBMS 24. This automatically generated unique identifier is then assigned to the data for the purpose of establishing a relationship which is suitable for processing by the RDBMS 24, such that the data can be stored and subsequently retrieved without any malfunction.

Another option for generating an assignable unique identifier is if a storage device 18 stores a list of suitable unique identifiers (UIDs) which can be processed by the RDBMS 24. This enables an assigning unit 16 to access the storage device 18 and receive a new but usable UID which can be assigned to the data to be stored in the RDBMS 24. It is then possible to send the data, together with their assigned new unique identifier, to a data writing unit 22 which is configured to write data into the RDBMS 24. The data writing unit 22 can of course also be configured to read or retrieve data written or stored in the RDBMS 24.

Another option is to send the data from the assigning unit 16 to the data writing unit 22 via a marking unit 20. The UID marking unit 20 is then configured to mark the new UID so that it is possible to ascertain whether an assigned UID has already been assigned before or not. Once the marking unit 20 has marked a UID, the system as a whole has access to control information telling it that the relevant UID has already been assigned automatically and/or is already in use within the RDBMS 24. If the new UID is thus found to already be in use, another UID which is not yet in use within the RDBMS 24 has to be assigned.

If the data checking unit 14 finds that a UID which is known to and in use within the RDBMS 24 has already been assigned to the received data, then the data are sent directly to the data writing unit 22 to be written into the RDBMS 24.

Accordingly, this embodiment allows a correspondingly configured system to use an RDBMS more flexibly, in that data which could not otherwise be mapped because no suitable UID has been assigned to them can be mapped by assigning a new UID which is not yet in use within the RDBMS 24.

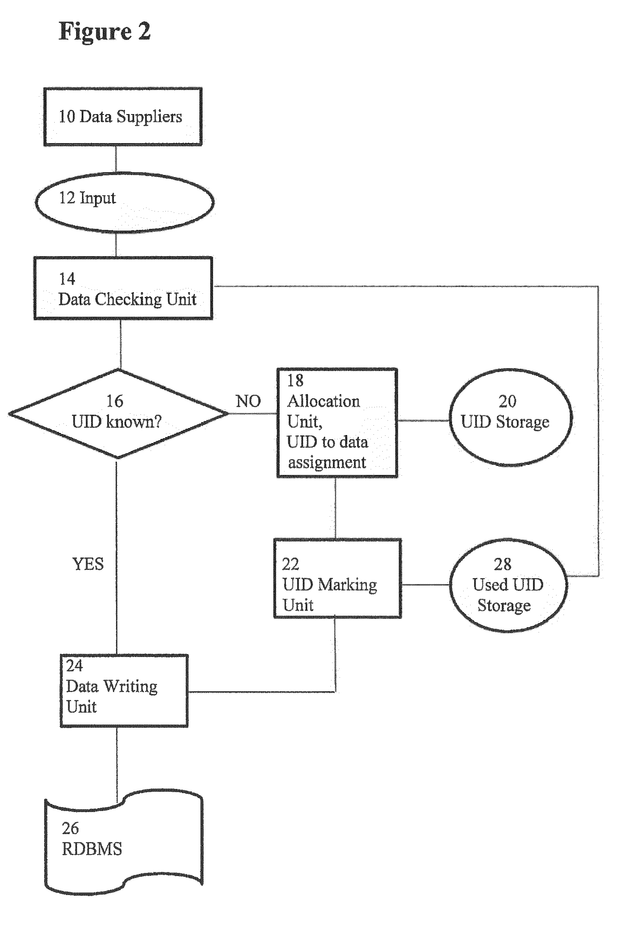

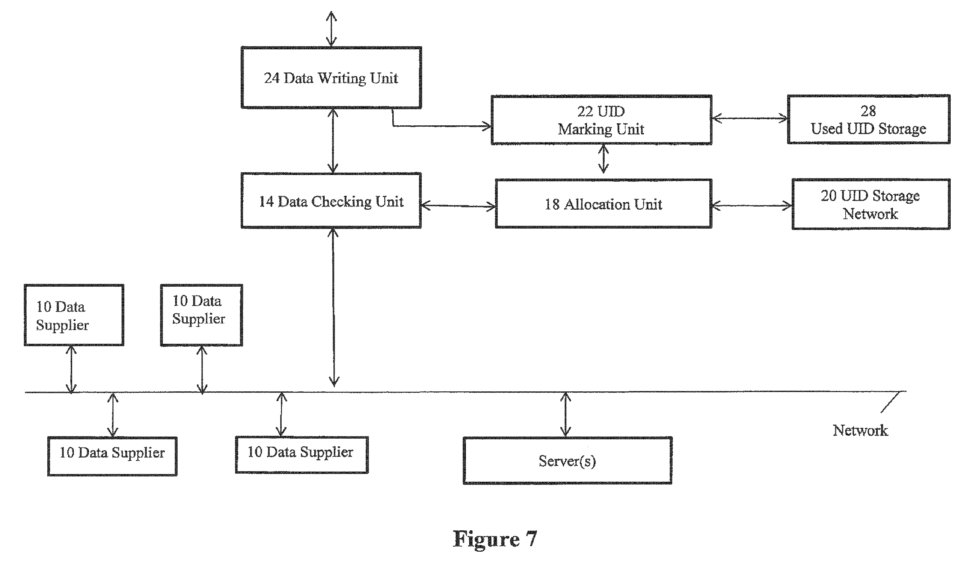

Figures 2 and 7 are showing another embodiment which can also use all of the various entities described in connection with Figure 1. In accordance with this embodiment, however, an additional storage device 26 is provided and connected to the marking unit 20. This additional storage device 26 can store assigned UIDs as well as other UIDs already in use within the RDBMS 24. The data checking unit 14 is connected to the storage device 26, such that the data checking unit 14 can determine whether incoming data are assigned to a used UID or to an unknown UID, wherein in the latter case, it is then necessary to assign a suitable UID to said data in order to enable the RDBMS 24 to store the corresponding data format.

Figure 7 shows a hardware diagram including all physical units discussed in connection with Figures 1 and 2. These units are connected to the data suppliers via a network which may be an intranet, the internet, a mobile network and the like. Additionally, a server or a larger number of servers may be connected for accessing RDBMS 26.

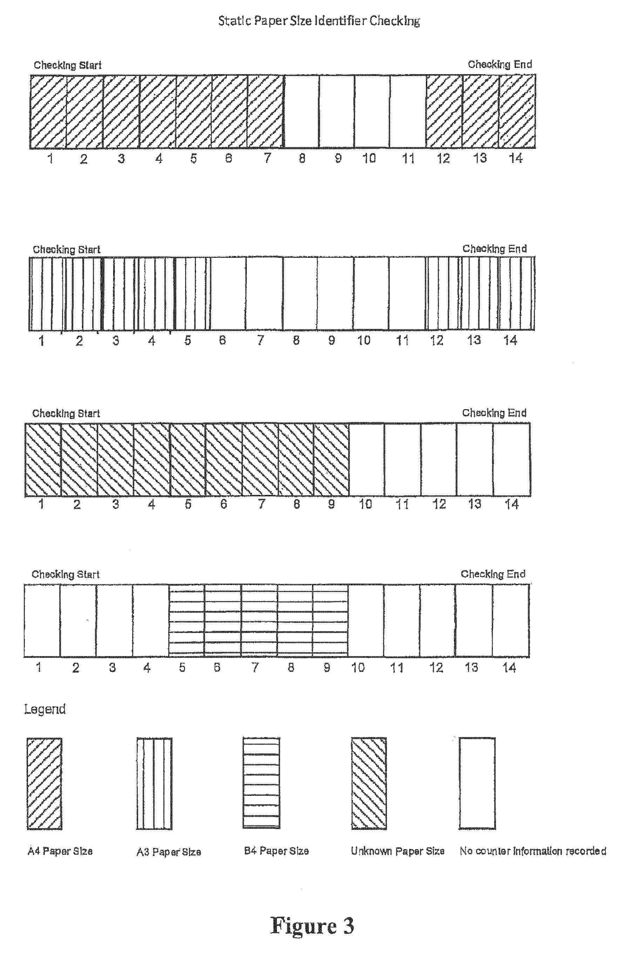

Another, more specific embodiment will now be described with reference to Figures 3 to 6. In accordance with this embodiment, a large number of printer devices represent the data suppliers 10 according to Figures 1 and 2. The unique identifiers are assigned as paper size unique identifiers for particular paper sizes of interest. Figure 3 includes a legend for different paper size formats used by the printer devices. Three paper sizes are known, namely A4, A3 and B4, and another paper size is unknown, even though it is in use. Yet another paper size is present for which no count information has been recorded. In accordance with Figure 3, the number of pages which exhibit a particular paper size are to be recorded in the RDBMS storage, wherein the first line in Figure 3 shows seven A4 pages being used ahead of four pages (8 to 11) which are not assigned to any counter information which has been recorded as being accessible. These are followed by another three pages exhibiting A4 paper size (12 to 14). In the second line in Figure 3, five pages of A3-sized paper are to be recorded in the RDBMS storage 24 according to Figures 1 and 2. These are followed by another six pages which are not assigned to any counter information (numbers 6 to 11). Finally, another three pages of A3 paper follow which are known and are to be assigned a corresponding unique identifier or paper size unique identifier. In the following two lines in Figure 3, corresponding numbers of pages exhibiting a particular paper size are again to be recorded and stored in the RDBMS. In accordance with the prior art, it would not be possible to store any information in an RDBMS directed to pages of unknown paper size or pages for which no counter information has been recorded.

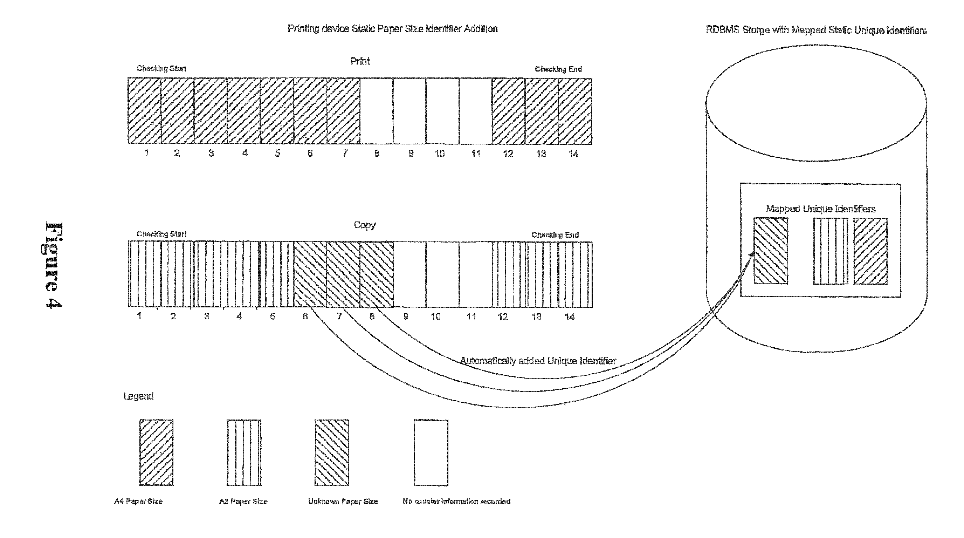

Figure 4 illustrates in principle a method as performed in accordance with Figures 1 and 2. In the second line in Figure 4, an unknown paper size has been identified in the case of pages 6 to 8. Another unique identifier is automatically added, such that it is then possible to store said data in the RDBMS, since it is then possible to map the relationship between the corresponding data and a storage location in the RDBMS by using the data checking unit according to Figures 1 and 2.

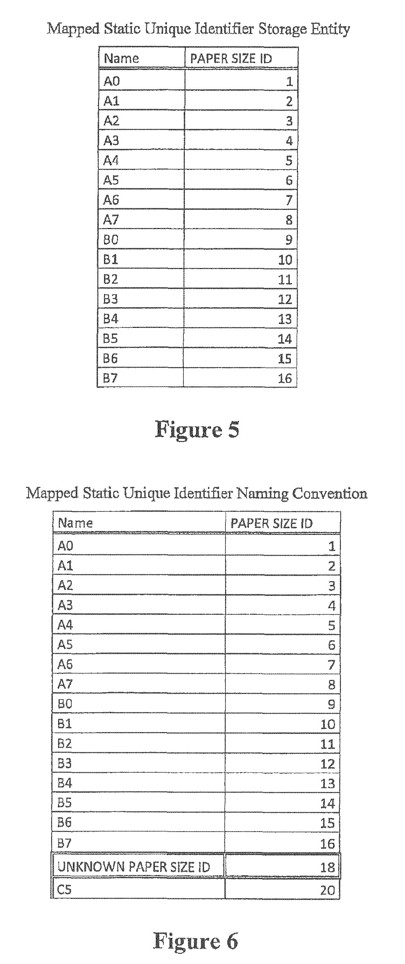

Figure 5 represents a storage entity for mapped static unique identifiers. Each paper size format is assigned a paper size ID, thus providing a relationship for mapping the data, in order to retrieve data from the RDBMS. If an unknown paper size is encountered, the storage entity does not contain a suitable relationship for mapping the corresponding data. Figure 6 shows a situation in which another unique identifier is generated and assigned to an unknown paper size ID, such that the corresponding data can then be mapped, i.e. written into the RDBMS storage system, and subsequently retrieved from the RDBMS using the same mapping relationship.

In summary, the proposed method includes two stages of data processing. In a first stage, the recorded printing device data, which contain paper size unique identifiers for particular paper sizes of interest, are automatically checked by identifying the paper size in a reference table of values for paper sizes relating to static paper size unique identifiers which are already registered in the RDBMS-based storage system. This check is performed on the basis of a data processing time interval of interest in accordance with Figure 1. If the paper size unique identifier found by the checking process is already known to the RDBMS storage system, it is not subjected to further processing but rather stored directly in the RDBMS. If, however, the paper size unique identifier detected is found to be new and unknown among the mapped static unique identifier values available, then the paper size unique identifier is automatically added to the stock of mapped static unique identifiers in accordance with Figure 4. In order to distinguish between mapped static unique identifiers which are automatically detected and added to the storage system from those which were already statically mapped and created initially, a special storage structure of mapped static unique identifiers (see Figure 5), together with a storage naming convention, could be used in accordance with Figure 6. In the second stage of an advantageous method employing the principles of the present invention, the paper size unique identifier found stores device counter data of the portions of the transmitted data already checked within the RDBMS storage system and thus processes the data which can already be stored in the RDBMS database.

## Claims

1. A method for storing data in a database having a particular relational database structure, comprising the following steps:
a) inputting the data, wherein each type of data is assigned an initial unique identifier (UID); and
b) storing the type of data in the database structure corresponding to its assigned unique identifier at the storage location corresponding to the mapping which is based on the assigned unique identifier;
**characterised by** the following steps:
c) checking the data to be inputted into the database and assigned to the initial unique identifier (UID) as to whether the unique identifier corresponds to a unique identifier which is listed as a unique identifier which exists in the database and can be processed in the database;
d) automatically generating a unique identifier if the data are not already assigned a listed unique identifier;
e) assigning a storage location within the database to the automatically generated unique identifier; and
f) storing the data assigned the automatically generated unique identifier at the assigned storage location in the database.

2. The method according to Claim 1, wherein the automatically generated unique identifier is marked as being an automatically generated unique identifier.

3. The method according to Claim 1 or 2, wherein the automatically generated unique identifier is added to the list of initial unique identifiers.

4. The method according to any one of Claims 1 to 3, wherein a mapping procedure is performed on the basis of initial unique identifiers and automatically generated unique identifiers.

5. A device for storing data in a relational database, wherein the device can be connected to the relational database (26) and comprises:
a) an input unit (12) configured to receive data having a data structure prepared for storage in the relational database (26);
b) a checking unit (14) which is configured to check whether the received data relate to a unique identifier used in the relational database (26);
c) an assigning unit (16) which is configured to assign an automatically generated unique identifier, which is to be assigned to the received data and is suitable for use in the relational database (24), to a storage location within the relational database, if the received data are not initially assigned a unique identifier used in the relational database (26).

6. The device according to Claim 5, further comprising a generating unit which is configured to automatically generate a new, automatically generated unique identifier suitable for storing data in the relational database (26).

7. The device according to Claim 5 or 6, further comprising a data storage device (18) configured to store unique identifiers which are suitable for storing data in the relational database (24).

8. The device according to any one of Claims 5 to 7, further comprising a marking unit (20) configured to mark automatically generated new unique identifiers as such.

9. The device according to any one of Claims 5 to 8, further comprising a data writing unit (22) configured to map the data in accordance with their assigned unique identifier in order to be stored in the relational database (26).

10. A system comprising a relational database (24) and **characterised by** a device for storing data in a relational database according to any one of Claims 5 to 9.

11. A program preferably stored on a data carrier or send via a network which, when run on a computer, a computer system and/or database system, causes the computer or system to perform the steps of the method according to any one of Claims 1 to 4.
